# EUROPEAN PATENT SPECIFICATION

(11) **EP 1 186 181 B1**
(45) Date of publication and mention of the grant of the patent: **11.08.2010**
(21) Application number: 00936923.2
(22) Date of filing: 12.06.2000
(51) Int. Cl.: H04W 88/00

(54) **METHOD IN AN INFORMATION SERVICE FOR A MOBILE PHONE**
VERFAHREN IN EINEM INFORMATIONSDIENST FÜR EIN MOBILTELEFON
PROCEDE APPLIQUE DANS UN SERVICE D'INFORMATION ET CONCERNANT UN TELEPHONE MOBILE

(30) Priority: 11.06.1999 FI 991352
(43) Date of publication of application: 13.03.2002
(60) Divisional application: 09178354.8
(73) Proprietor: Elisa Oyj, 00520 Helsinki (FI)
(72) Inventor: ISOTALO, Lauri, FIN-00930 Helsinki (FI)
(74) Representative: Lipsanen, Jari Seppo Einari
(86) International application number: PCT/FI2000/000528
(87) International publication number: WO 2000/078068

(56) References cited:
- WO-A1-97/27546
- WO-A1-97/28661
- WO-A1-97/41654
- WO-A1-98/48587
- WO-A2-98/51097

## Description

The invention relates to a method suited for submitting information to a mobile terminal subscriber automatically on the basis of predetermined subscriber needs without receiving a distinct order for information from the subscriber immediately prior to the transmission of information.

This kind of method is used for providing personalized information service to a mobile terminal subscriber, whereby in the method the information is transmitted to a mobile phone or any other mobile terminal using the GSM (Global System for Mobile Communications) technology or other telecommunications means. The service may be provided to an individual mobile terminal subscriber as well as to an entire group of mobile terminal subscribers formed by, e.g., the personnel of a corporate body.

The prior-art technology is based on methods, wherein the mobile terminal subscriber first sends a request according to a predetermined procedure which triggers a search on the needed information that is then transmitted to the mobile terminal subscriber. In practice, this takes place so that the mobile terminal subscriber sends a short message in the SMS format with the request for desired information to a telephone number given by the service provider. In a short while, the mobile terminal subscriber will receive a short message in the SMS format with the requested information. This embodiment is technically based on a server operating in conjunction with the SMS exchange that receives the SMS-type short message indicating the need for certain information and retrieves over the telecommunications network the desired information, compiles the same into the SMS-type short message of an appropriate content and sends it to the mobile terminal subscriber requesting the information.

Also Internet pages can be read by means of certain mobile phone models.

The state-of-the-art technology is capable of facilitating the use of subscriber services that are more advanced and user-friendly than those outlined above. For instance, the so-called WAP (Wireless Application Protocol) technology permits mobile phones to receive information also in graphic format. With the help of the WAP technology, it is possible to connect mobile phone networks to the Internet, whereby a mobile terminal in practice becomes an Internet browser. A prerequisite to this is that the Internet pages are compiled using the WML (Wireless Markup Language) code instead of the conventional HTML code. The WML code was developed for efficient transmission of graphic information over the limited transmission bandwidth of the mobile phone network. With the help of the WAP technology, also the user interfaces of information services may be developed toward greater user-friendliness, whereby a mobile terminal subscriber may replace the tedious task of sending a standard-format request from his mobile terminal by a selection of the desired service from his graphic user interface. By virtue of the WAP technology, also a data transfer call can be used for transmitting information in the WML-coded format instead of passing the information superimposed on an SMS-type short message.

There are also short-message services available that are based on information bulletins distributed at regular intervals as SMS-type transmissions. The selection of these services cover a wide spectrum of different areas of interest wherefrom the customer can choose his favorite one(s). In addition to the standard scheduled bulletins, special announcements can be broadcast if any unusually important news emerge within the scope of the service. Such areas of interest may be categorized as, e.g., news, business news, sports news or weather forecasts.

In the art are also known methods that allow information to be sent to the service customer terminal according to predetermined personalized user profile. These kinds of methods are described in patent publications WO 98/51097 and WO 97/41654. In the method disclosed in patent publication WO 97/41654, the retrieved information can be sent to the service customer's mobile terminal. The scope of patent publication WO 98/51097 covers a more general selection of different services that can be implemented over a communications connection established between a mobile terminal and a service provider.

A problem hampering the prior-art technologys in the viewpoint of the mobile terminal subscriber is the lack of an autonomous initiative from the side of the offered information services. To obtain information, the mobile terminal subscriber must always submit a request message. If the mobile terminal subscriber wishes to get information on changes in certain news groups or selected areas of interest, he must send every now and then a request message to receive updated information. From the standpoint of the mobile terminal subscriber, this is an awkward as well as inefficient situation inasmuch the information on an already occurred change is submitted only on request instead of being transmitted immediately in real time with the occurrence of the change. If the mobile terminal subscriber wishes to minimize the delay caused by this, he must resort to continually sending update requests. The lack of an autonomous initiative in the function of prior-art information services also occurs such that the mobile terminal subscriber cannot access an information service of the WAP technology type involving a data call connection immediately when it is available, but rather not until the calling mobile terminal subscriber has himself actively established a data call connection.

WO 97 41654 A1 discloses an information dissemination system using SMS short messages to transmit information to mobile terminals.

WO 97 27546 A1 discloses an information dissemination system using broadcast technology with wireless alerts and wired or wireless connections to the information source.

It is an object of the invention to provide a new method for transmitting information to a mobile terminal.

the method according to the invention is characterized by what is stated in the characterizing part of claim 1.

The invention provides significant benefits.

By virtue of the invention, it is possible to implement an information service capable of submitting a customer substantial amounts of information contents automatically without any need to burden the customer with actions to actively search for the information. The transmission of large information contents is facilitated by the data communications connection established in the method. As the method deviates from known technologys by permitting the data communications connection to be established by way of a connection set-up command, the service can be automated and yet the data transfer can be charged according to normal billing rules to the customer subject to the call.

In the following, the invention will be described in more detail with the help of an example by making reference to the appended drawings.

For full appreciation of the benefits of the invention, a situation is described in the example having the mobile terminal subscription of the mobile terminal subscriber located in some other country than the national country of the subscriber's local mobile phone network operator. Herein, the national country of the mobile phone operator is defined as the country within the borders of which the mobile phone operator can offer mobile terminal services utilizing the resources of the operator's local network, that is, without resorting to the mobile phone network and/or services of a third party operator. Further in the example, the term national mobile phone network operator is used when reference is made to a mobile phone network operator that provides services directly to a mobile terminal subscriber while, respectively, the term foreign mobile phone network operator is used when reference is made to a mobile phone network operator that in turn provides services to the national mobile phone network operator. Obviously, the invention can be implemented equally well when the mobile terminal of the mobile terminal subscriber is located in the national country of the mobile phone network operator.

For greater clarity, some specific details are omitted in the example from the functional description of a digital telephone network such as a GSM or UMTS (Universal Mobile Telecommunication System) network. In the case that the invention is implemented in a GSM network, the overall configuration includes a plurality of network components, whose function is not specifically mentioned in the description of the exemplifying embodiment, such components are a GMSC (Gateway Mobile Switching Center), a BSC (Base Station Controller) and a BSS (Base Station System), for example. The description also omits the possible acknowledge routines of the short-messages communications involved.

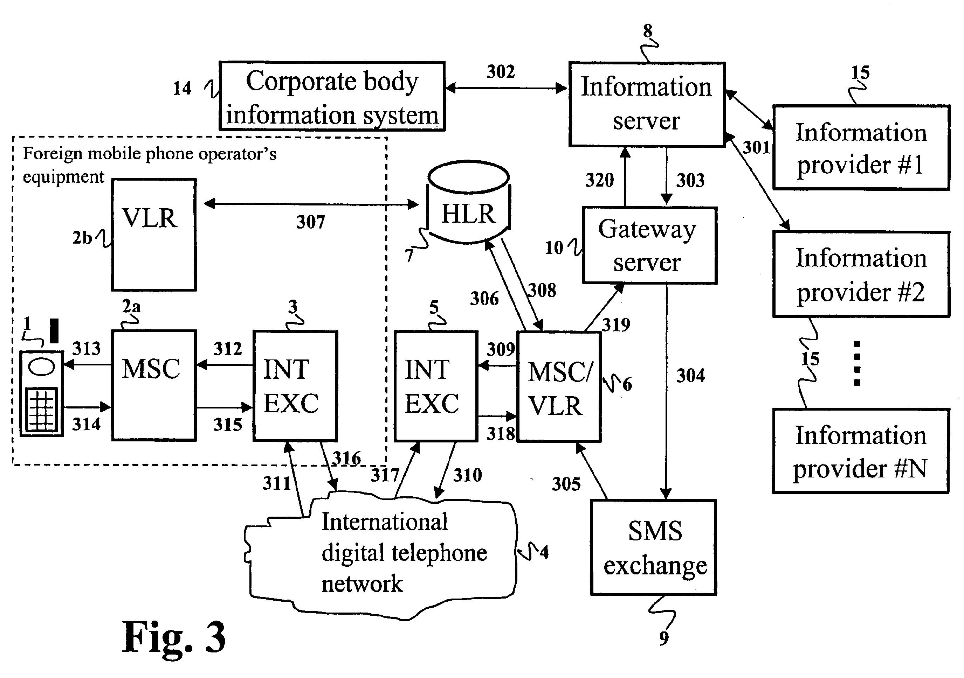

FIG. 3 is a schematic block diagram of the information selection performed on the raw information submitted by information producers so that the estimated needs of the mobile terminal subscriber are taken into account and then transmitting the selected information to the mobile terminal subscriber.

Now referring to FIG. 3, the system shown therein comprises in a similar manner as the one shown in FIG. 1 a foreign operator's MSC 2a, a VLR (visitor location register) 2b operating in conjunction with the MSC 2a, a foreign operator's international exchange 3, a mobile terminal subscription 1 located within the coverage area of the MSC 2a, a national operator's international exchange 5, an international digital telephone network 4 connecting the international exchanges 3 and 5, a national operator's MSC 6, a national operator's home location register HLR 7 and an information server 8. In addition to these, the system shown in FIG. 3 includes an SMS-type short-message exchange 9, a gateway server 10, an information system 14 of the user or user group corporate body and information providers 15.

The information providers may be such parties as Internet home page hosts, news agencies or other information service producers including transportation companies, stock exchanges and weather forecasting associations, for example.

To the information flow to be transmitted to the mobile terminal subscriber, information is selected from the information offered by the information producers and, optionally, also from information accessible in the information system of the corporate body with which the mobile terminal subscriber is associated. As a certain piece of information may be submitted to the information server via both of the above-mentioned routes or from a plurality of information producers, the information server must be capable of selectively discarding redundant and already earlier to the mobile terminal subscriber transmitted information during the screening of the information to be transmitted to the mobile terminal subscriber. To the information to be sent to the mobile terminal subscriber may also be selected a portion of a larger information content, for example, the time tables of a transportation company can be searched for given routes over a given period of time.

In the description of the exemplifying embodiment, the information content screened for the use of the mobile terminal subscriber is called an information package. The information package screened for sending to the mobile terminal subscriber is transmitted to the mobile terminal subscriber formatted in the WML, either as an SMS-type short message or a data connection call depending on the size of the information package. Typically, the information package is transmitted as a single SMS-type short message or, if necessary, by sending a plurality of short messages. When the amount of data in the information package is substantial, the mobile terminal is controlled with the help of an SMS-type short message to set up for a data connection call. After receiving the control command for setting up a data connection call, the mobile terminal automatically establishes a data connection call to the information server that then transmits the information package over the data connection call. Hence, only the steps numbered as 314 - 320 in the following exemplifying embodiment need to be carried out when a data connection call is used for transmission.

The transmission of information packages may be optionally complemented with a feedback query function, whereby the customer can express his sentiments about the transmitted information package. Then, on the basis of the received feedback, the information flow transmitted to the customer can be modified as required.

In the operation of the method illustrated in FIG. 3 for selective sorting of the information received from information producers and transmitting the thus selected information to a mobile terminal subscription, the following steps are carried out:
301) An information server 8 retrieves or receives information from information producers 15 and compares the content of the thus obtained information with the anticipated information service need profile of the mobile terminal subscriber.
302) The information server 8 retrieves or receives information from the corporate information system 14 and compares the content of the thus obtained information with the anticipated information service need profile of the mobile terminal subscriber.
303) The information server 8 selectively sorts the received information to compile the information package to be send to the mobile terminal subscriber, converts the information content into the WML-coded format if necessary and sends the information package thus processed to a gateway server 10.
304) Depending on the size of the information package, the gateway server 10 either sends the information package directly as an SMS-type short message or, alternatively, issues a data connection call set-up command to a short-message service exchange SMS 9.
305) The short-message service exchange SMS 9 relays the information package or, respectively, the data connection call set-up command to a MSC 6.
306) The MSC 6 sends a query to the home location register HLR 7 in order to find the so-called roaming number of the mobile terminal subscription 1. With the help of the roaming number, the information package or, respectively, the data connection call set-up command can be routed to the mobile terminal subscription 1.
307) The home location register HLR 7 sends a query to the visitor location register VLR 2b that is indicated to have the mobile terminal subscription 1 within its coverage area. After the receipt of the query, the visitor location register 2b sends the requested roaming number as a reply to the home location register HLR 7.
308) The home location register HLR 7 relays the roaming number of the mobile terminal subscription 1 to the MSC 6.
309) Based on the roaming number of the mobile terminal subscription 1, the MSC 6 sends the information package or, respectively, the data connection call set-up command in an SMS-type short message format to an appropriate international exchange 5.
310) and 311) The international exchange 5 sends the information package or, respectively, the data connection call set-up command in an SMS-type short message format via the international digital telephone network 4 to the foreign mobile phone network operator's international exchange 5.
312) The international exchange 5 the information package or, respectively, the data connection call set-up command in an SMS-type short message format to a foreign operator's MSC 2a.
313) The MSC 2a sends the information package or, respectively, the data connection call set-up command in an SMS-type short message format to the mobile terminal subscription 1. If the information package is already coded in WML, it will be displayed in a suitable manner on the mobile terminal 1. When the mobile terminal 1 receives a data connection call set-up command, it will establish a data connection call in the manner instructed by the data communication call set-up command.
314) - 320) After the receipt of the data connection call set-up command, the mobile terminal subscription 1 establishes a data connection call to the information server 8 as instructed by the data connection call set-up command. The data connection call is relayed via the MSC 2a, the foreign operator's international exchange 3, the international digital telephone network 4, the national operator's international exchange 5, the national operator's MSC 6 and the gateway server 10. After a successful set-up of the data connection call, the information server 8 transmits the information package via the data connection call to the mobile terminal 1, wherein the information package coded in WML will be displayed in a suitable manner.

In the context of the present application and, particularly, in the claims thereof, the term information provider refers to a party which is capable of submitting data over an information network to the operator's system or subsystem and/or of offering its system accessible by the operator's system or subsystem for information retrieval. This type of a party can be, e.g., a server or terminal maintained by the customer himself or the like facility closely associated with the customer in the same manner as the server of the customer's corporate body, for instance. The information provider may also be, e.g., a company specialized in submitting a certain kind of information from its server to an information network and/or a mobile phone network. The information provider may also be a body publishing some type of information, e.g., in a public or private information network such as the Internet or an intranet. Furthermore, the information provider accessible by the operator's subsystem may be another subsystem of the operator.

In the context of the present application and, particularly, in the claims thereof, the term information server refers to a system capable of maintaining information received from information providers and/or converting the same into a desired format and/or sending the information via a mobile phone network to a customer's mobile terminal. The operation of the information server may be controlled by the network operator and/or the information provider and/or the customer himself.

Further in the context of the present application and, particularly, in the claims thereof, the term information network refers to a system capable of transmitting information from at least one first physical location to another physical location. Particularly in the context of the present application, such information networks include, among others, the Internet, an extranet, an intranet, a public or a private-access telephone or mobile terminal network or, as an example, an ATM network.

In the context of the present application and, particularly, in the claims thereof, the term corporate body refers to a party with which the mobile terminal subscriber is in some manner associated. Such a body may be, e.g., a firm, association or an organization governed by an authority. The corporate body may modify the information flow of its employee, member or customer in the same fashion as is illustrated in FIG. 2 in regard to the information service provider.

Should the gateway server 10 in the future become capable of performing an HTML-WML conversion, it is possible that the information server 8 transmits the information package in HTML-format to the gateway server 10.

The WAP-compatible mobile terminal subscription 1 may also be such that is embedded in a stationary or mobile machine, automated apparatus or system which is capable of utilizing the received information. A machine compatible with this definition is, e.g., a car that on its vehicle computer receives weather or traffic information transmitted using the method according to the invention.

In addition to GSM networks, the invention can be applied on GPRS (General Packet Radio System), EDGE (Enhanced Data for GSM) and UTMS technologies, since the WAP can used as a protocol over different transmission paths and connection technologys. In the above exemplifying embodiments, the application of the invention is described by way of example based generally on the GSM network technology. To a person skilled in the art, however, it is obvious from the above examples and common practice how to apply the invention, e.g., in conjunction with UMTS and GPRS networks. It is also obvious to a person skilled in the art how to replace the network elements described above by the respective elements of the actually used network. It is further obvious to a person skilled in the art that a telephone number as a numeric network address can be replaced by other types of addresses.

In the method according to the invention, the information transmitted over a data connection call can be converted from one form of the WAP-compatible convention to another form of the WAP-compatible convention so that, e.g., the gateway server 10 receives the data in ASCII-WML format and retransmits the same to the mobile phone network in binary WML format. Hence, in the method the format of the data transmitted over a data connection call may be converted from one WML format to another format within the mobile phone network and then the data may again be converted from the other format back a WML format prior to submitting the data to the terminal device.

## Claims

1. Method for transmitting (313) an information package from an information server (8) to a mobile terminal (1) using the GSM technology, **characterized in that** said transmission of the information package comprises:
the information server (8) sending to said mobile terminal an SMS-type short message, containing a data connection set-up command instructing the mobile terminal (1) to automatically establish a data connection to the information server (8);
the information server (8) receiving from the mobile terminal a request for establishing a packet-switched data connection to the information server (8);
establishing the requested packet-switched data connection; and
sending the information package from the information server (8) to the mobile terminal (1) over the established packet-switched data connection.

2. Method according to claim 1, **characterized in that** the packet-switched data connection is a GPRS network data transfer connection.

3. Method according to claim 1, **characterized in that** the packet-switched data connection is a UMTS network data transfer connection.

## Patentansprüche

1. Verfahren zur Übermittlung (313) eines Informationspaketes von einem Informationsserver (8) zu einem mobilen Terminal (1) unter Verwendung der GSM-Technologie, **dadurch gekennzeichnet, dass** die genannte Übermittlung des Informationspaketes umfasst:
- der Informationsserver (8) sendet dem genannten mobilen Terminal eine SMStypische Kurznachricht, die einen Setup-Befehl für die Datenverbindung enthält und den mobilen Terminal (1) anweist, automatisch eine Datenverbindung zu dem Informationsserver (8) herzustellen;
- der Informationsserver (8) empfängt von dem mobilen Terminal eine Anforderung zur Herstellung einer paketvermittelten Datenverbindung zu dem Informationsserver (8);
- Herstellen der angeforderten paketvermittelten Datenverbindung; und
- Senden des Informationspaketes von dem Informationsserver (8) zu dem mobilen Terminal (1) über die hergestellte paketvermittelte Datenverbindung.

2. Verfahren nach Anspruch 1, **dadurch gekennzeichnet, dass** die paketvermittelte Datenverbindung eine Datenübertragungsverbindung in einem GPRS-Netzwerk ist.

3. Verfahren nach Anspruch 1, **dadurch gekennzeichnet, dass** die paketvermittelte Datenverbindung eine Datenübertragungsverbindung in einem UMTS-Netzwerk ist.

## Revendications

1. Procédé pour transmettre (313) un package d'information d'un serveur d'information (8) à un terminal mobile (1) en utilisant la technologie GSM, **caractérisé en ce que** ladite transmission du package d'information comprend :
le serveur d'information (8) envoyant audit terminal mobile un message court du type SMS contenant une commande d'établissement de connexion de données donnant pour instruction au terminal mobile (1) d'établir automatiquement une connexion de données au serveur d'information (8) ;
le serveur d'information (8) recevant du terminal mobile une demande pour établir une connexion de données à commutation de paquets au serveur d'information (8) ;
l'établissement de la connexion de données à commutation de paquets demandée ; et
l'envoi du package d'information du serveur d'information (8) au terminal mobile (1) sur la connexion de données à commutation de paquets établie.

2. Procédé selon la revendication 1, **caractérisé en ce que** la connexion de données à commutation de paquets est une connexion de transfert de données de réseau GPRS.

3. Procédé selon la revendication 1, **caractérisé en ce que** la connexion de données à commutation de paquets est une connexion de transfert de données de réseau UMTS.
